(19) Europäisches Patentamt
European Patent Office
Office européen des brevets

(11) EP 4 323 448 B1

(12) EUROPEAN PATENT SPECIFICATION

(45) Date of publication and mention of the grant of the patent:
**12.03.2025 Bulletin 2025/11**

(21) Application number: **22722235.3**

(22) Date of filing: **11.04.2022**

(51) International Patent Classification (IPC):
***C08L 23/12*** *(2006.01)*

(52) Cooperative Patent Classification (CPC):
(C-Sets available)
**C08L 23/12;** C08L 2201/10; C08L 2203/162;
C08L 2205/025; C08L 2205/03 (Cont.)

(86) International application number:
**PCT/EP2022/059642**

(87) International publication number:
**WO 2022/218925 (20.10.2022 Gazette 2022/42)**

(54) **PROPYLENE POLYMER COMPOSITIONS**

AUS RECYCELTEN POLYOLEFINEN ERHALTENE ZUSAMMENSETZUNGEN

COMPOSITIONS OBTENUES À PARTIR DE POLYOLÉFINES RECYCLÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2021 EP 21168430**

(43) Date of publication of application:
**21.02.2024 Bulletin 2024/08**

(73) Proprietor: **Basell Poliolefine Italia S.r.l.**
**20121 Milano (IT)**

(72) Inventors:
- **RIEMMA, Antonio**
  **44122 Ferrara (IT)**
- **CIACCIA, Eleonora**
  **44122 Ferrara (IT)**
- **IZZI, Marco**
  **60325 Frankfurt/M. (DE)**
- **CIARAFONI, Marco**
  **44122 Ferrara (IT)**
- **DI CAPUA, Alessia**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2013/092615**
**WO-A1-2013/135654**
**US-B2- 9 932 468**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/142, C08L 23/14**

## Description

FIELD OF THE INVENTION

The present invention relates to a propylene polymer composition having excellent optical properties after sterilization and good mechanical properties

BACKGROUND OF THE INVENTION

The isotactic polypropylene is endowed with an exceptional combination of excellent properties which render it suitable for a very great number of uses.

In order to improve the properties of the isotactic polypropylene the crystallinity of the propylene homopolymer is decreased by copolymerization of the propylene with small quantities of ethylene and/or $\alpha$-olefins such as 1-butene, 1-pentene and 1-hexene. In this manner one obtains the so called random crystalline propylene copolymers which, when compared to the homopolymer, are essentially characterized by better flexibility and transparency.

Propylene random copolymers, however, although they have good transparency, do not offer, especially at low temperatures, sufficiently better impact resistance than the homopolymer which can be satisfactory used for the applications listed above.

It has been known for a long time that the impact resistance of polypropylene can be improved by adding an adequate quantity of elastomeric propylene-ethylene copolymer to the homopolymers by mechanical blending or sequential polymerization. However, this improvement is obtained at the expenses of the transparency of the material especially after the sterilization process.

WO2013/135654 relates to a propylene polymer compositions comprising:

A) from 70 wt% to 95 wt%, of a random copolymer of propylene with ethylene, containing from 3.5 wt% to 8.5 wt%, of ethylene derived units, having a content of fraction soluble in xylene at 25°C comprised between 7.1 wt% and 15.2 wt% and having a melting point higher than 142.0°C;
B) from 5 wt% to 35 wt%, of a copolymer of propylene with ethylene, containing from 8.5 wt% to 17.0 wt % of ethylene derived units;

the sum A+B being 100;
wherein the melt flow rate, MFR (ISO 1133 (230° C, 2.16 kg).) from 0.6 g/10 min to 20.2 g/10 min.

This composition shows a limited increasing of the haze of the film after the sterilization process. However the haze after sterilization can be improved.

US 9,932,468 B2 refers to polypropylene compositions comprising three propylene polymer components suitable for producing films having a low SIT and low haze.

SUMMARY OF THE INVENTION

The applicant found a propylene polymer composition that can be used for obtaining sterilized films having a particular balance of properties.

Thus one object of the present disclosure is a propylene polymer composition comprising:

A)from 30 wt% to 50 wt% of a propylene homopolymer or a copolymer of propylene with ethylene, containing up to 1.0 wt%, of ethylene derived units, measured by NMR; having a melting point, measured by DSC, comprised between 152 °C and 162°C;
B) from 35 wt% to 55 wt%, of a copolymer of propylene with ethylene, containing from 2.5 wt% to 5.8 wt%, of ethylene derived units, measured by NMR;
C) from 5 wt% to 24 wt%, of a copolymer of propylene with ethylene, containing from 6.0 wt% to 8.0 wt %, of ethylene derived units , measured by NMR;

the sum of the amount of A,B and C being 100 wt%;
wherein in the propylene polymer composition:

- the melt flow rate, (ISO 1133 (230° C, 2.16 kg) ranges from 0.5 g/10 min to 15.2 g/10 min; preferably from 1.0 g/10 min to 15.2 g/10 min;
- the xylene soluble fraction measured at 25°C ranges from 3.0 wt % to 8.0 wt%;

- the total content of ethylene derived units, measured by NMR; ranges from 2.0 wt% to 4.5 wt%;
- the content of ethylene derived units, measured by NMR; in the fraction soluble in xylene at 25°C ranges from 18.2 wt% to 23.4 wt%;
- the melting point measured by DSC ranges from 145 °C to 160 °C;

DETAILED DESCRIPTION OF THE INVENTION

The applicant found a propylene polymer composition that can be used for obtaining sterilized films having a particular balance of properties.

Thus one object of the present disclosure is a propylene polymer composition comprising:

A)from 30 wt% to 50 wt%; preferably from 35 wt% to 45 wt%; more preferably from 37 wt% to 43 wt% of a propylene homopolymer or a copolymer of propylene with ethylene, containing up to 1.0 wt%, preferably up to 0.8 wt%; more preferably up to 0.6 wt% of ethylene derived units, measured by NMR; having a melting point, measured by DSC, comprised between 152 °C and 162°C;preferably comprised between 155 °C and 161°C; more preferably comprised between 156°C and 160°C;
B) from 35 wt% to 55 wt%, preferably from 40 wt% to 50 wt%; more preferably from 40 wt% and 47 wt% of a copolymer of propylene with ethylene, containing from 2.5 wt% to 5.8 wt%, preferably containing from 3.5 wt% to 5.3 wt%, more preferably containing from 3.9 wt% to 4.9 wt% of ethylene derived units, measured by NMR;
C) from 5 wt% to 24 wt%, preferably from 8 wt% to 18 wt%, more preferably from 12 wt% to 16 wt%, of a copolymer of propylene with ethylene, containing from 6.0 wt% to 8.0 wt %, preferably containing from 6.3 wt% to 7.8 wt %, of ethylene derived units; more preferably containing from 6.5 wt% to 7.3 wt %,

the sum of the amounts of A, B and C being 100 wt%;
wherein in the propylene polymer composition:

- the melt flow rate, (ISO 1133 (230° C, 2.16 kg). ranges from 0.5 g/10 min to 15.2 g/10 min preferably from 1.0 g/10 min to 15.2 g/10 min; more preferably ranges from 4.2 g/10 min to 11.2 g/10; even more preferably ranges from 5.3 g/10 min to 8.4 g/10;
- the xylene soluble fraction measured at 25°C ranges from 3.0 wt % to 8.0 wt%; preferably ranges from 3.5 wt % to 7.5 wt%; more preferably ranges from 4.2 wt % to 6.3 wt%;
- the total content of ethylene derived units, measured by NMR; ranges from 2.0 wt% to 4.5 wt%; preferably ranges from 2.5 wt% to 4.2 wt%; ranges from 2.7 wt% to 3.7 wt%;
- the content of ethylene derived units, measured by NMR; in the fraction soluble in xylene at 25°C ranges from 18.2 wt% to 23.4 wt%; preferably ranges from 19.2 wt% to 22.4 wt%; more preferably ranges from 19.8 wt% to 21.4 wt%;
- the melting point, measured by DSC ranges from 145 °C to 160 °C; preferably ranges from 147 °C to 159 °C; more preferably ranges from 148 °C to 158 °C.

The term "copolymer" means polymers containing only propylene and ethylene.

The present invention is preferably endowed with one or more of the following features:

a Tensile Modulus of the composition higher than 700 MPa;
Haze of the composition measured on 70μm film after sterilization lower than 12.0 % preferably lower than 11.0 % more preferably lower than 10.5 % ;
The difference between the melting point and the seal initiation temperature (SIT) measured on a 70μm higher than 15°C; preferably higher than 16°C;

- the hexane soluble fraction measured on a film having a thickness of 100μ ranges from 0.5 wt% to 2.2 wt%; preferably ranges from 0.7 wt% to 1.9 wt%; more preferably ranges from 0.9 wt% to 1.6 wt%.

Component A) of the composition of present invention are obtainable by polymerizing propylene and optionally ethylene according to known techniques, for example, slurry polymerization using as a diluent an inert hydrocarbon solvent, or bulk polymerization using the liquid monomer (for example, propylene) as a reaction medium. Moreover, it is possible to carry out the polymerization process in gas-phase operating in one or more fluidized or mechanically agitated bed reactors.

Components B) and C) of the composition of present invention are obtainable by polymerizing propylene and ethylene according to known techniques, for example, slurry polymerization using as a diluent an inert hydrocarbon

solvent, or bulk polymerization using the liquid monomer (for example, propylene) as a reaction medium. Moreover, it is possible to carry out the polymerization process in gas-phase operating in one or more fluidized or mechanically agitated bed reactors.

The polymerization to obtain components A), B) and C) is generally carried out at temperatures of from 20 to 120°C, preferably of from 40 to 80°C. When the polymerization is carried out in gas-phase, the operating pressure is generally between 0.5 and 5 MPa, preferably between 1 and 4 MPa. In bulk polymerization, the operating pressure is generally between 1 and 8 MPa, preferably between 1.5 and 5 MPa. Hydrogen is typically used as a molecular weight regulator.

Components A), B) and C) can be prepared and the blended together according to processes well known in the art, otherwise they can be prepared in series. For example component A) can be prepared in a loop reactor in bulk by using propylene as reaction medium, the product prepared in the first loop can be feed in a second loop to polymerize component B) in bulk by using propylene as reaction medium and the reaction product can be feed to a gas phase reactor to obtain component C) and the final composition.

Such polymerisations can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the invention are capable of producing polypropylene homopolymer with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

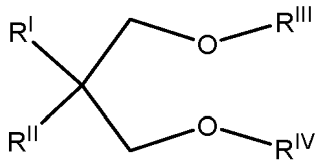

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si(OCH$_3$)$_2$, (cyclohexyl)(methyl)Si (OCH$_3$)$_2$, (cyclopen-

tyl)$_2$Si(OCH$_3$)$_2$ and (phenyl)$_2$Si(OCH$_3$)$_2$ and (1,1,2-trimethylpropyl)Si(OCH$_3$)$_3$.

1,3-diethers having the formulae described above can also be used advantageously. If the internal donor is one of these diethers, the external donors can be omitted.

In particular, even if many other combinations of the previously said catalyst components may allow to obtain propylene polymer compositions according to the present invention, the terpolymers are preferably prepared by using catalysts containing a phthalate as internal donor and (cyclopentyl)$_2$Si(OCH$_3$)$_2$ as outside donor, or the said 1,3-diethers as internal donors.

Preferably said polypropylene composition being obtainable with a polymerization process carried out in the presence of a catalyst system comprising the product obtained by contacting (a) a solid catalyst component having preferably average particle size ranging from 15 to 80 μm comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers, (b) an aluminum hydrocarbyl compound and optionally (c) an external electron donor compound.

The regulation of the molecular weight is carried out by using known regulators, hydrogen in particular.

By properly dosing the concentration of the molecular weight regulator in the relevant steps, the previously described MFR and [η] values are obtained.

The catalysts can be pre-contacted with small amounts of olefins (prepolymerization).

The compositions of the present invention can also be obtained by preparing separately the said components A), B) and C) by operating with the same catalysts and substantially under the same polymerization conditions as previously explained (except that a wholly sequential polymerization process will not be carried out, but the said components and fractions will be prepared in separate polymerization steps) and then mechanically blending said components and fractions in the molten or softened state. Conventional mixing apparatuses, like screw extruders, in particular twin screw extruders, can be used.

The compositions of the present invention can also contain additives commonly employed in the art, such as antioxidants, light stabilizers, heat stabilizers, nucleating agents, colorants and fillers.

In particular, the addition of nucleating agents brings about a considerable improvement in important physical-mechanical properties, such as Flexural Modulus, Heat Distortion Temperature (HDT), tensile strength at yield and transparency.

Typical examples of nucleating agents are the p-tert.-butyl benzoate and the 1,3- and 2,4-dibenzylidenesorbitols.

The nucleating agents are preferably added to the compositions of the present invention in quantities ranging from 0.05 to 2% by weight, more preferably from 0.1 to 1% by weight with respect to the total weight.

The addition of inorganic fillers, such as talc, calcium carbonate and mineral fibers, also brings about an improvement to some mechanical properties, such as Flexural Modulus and HDT. Talc can also have a nucleating effect.

The melt flow rate of the composition can be adjusted by visbreaking the composition with methods known in the art such as peroxides.

The compositions of the present invention are particularly suited for the production of films such as BOPP films, blow films or cast films mono and multilayer, Cast films are particularly preferred. The film obtained with the composition of the present disclosure can be easy sterilized with a limited worsening of the optical properties such as haze and gloss. The SIT of the film obtained with the composition of the present disclosure is relatively low.

The composition of the present disclosure are especially fit for the production of retortable pouches. Retortable pouches are multi-material laminated packages sterilized to preserve their food content after being sealed. The melting point and the SIT of the composition of the present disclosure allow to prepare mono material packaging completely recyclable while in the art usually the external layer is made with PET.

Thus a further object of the present disclosure are films prepared with the propylene polymer composition above described. Preferably cast film are prepared with the propylene polymer composition above described. More preferably multilayer films comprising the propylene polymer composition above described. Even more preferably propylene polymer composition above described is fit for the preparation of a multilayer sterilizable film.

The sterilization can be carried out with the processes commonly known in the art such as heat the polymer at temperatures higher than 120°C but lower than the melting point of the polymer.

The particulars are given in the following examples, which are given to illustrate, without limiting, the present invention.

EXAMPLES

Melt Flow Rate

Determined according to ISO 1133 (230° C, 2.16 kg).

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE= 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:
E% mol = 100 * [PEP+PEE+EEE]The weight percentage of ethylene content was evaluated using the following equation:

$$E\%\ wt. = \frac{*\ E\%\ mol\ *\ MW_E}{E\%\ mol\ *\ MW_{E} + P\%\ mol\ *\ MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm)

The amount of ethylene derived units of components B) and C) have bene calculated by using the following formula

$$C_{2tot}=C_{2A}*A+C_{2B}*B+ C_{2c}*C$$

To be used at various stages of the polymerization process.
Wherein $C_{2tot}$ is the amount of ethylene derived units in the composition; $C2_A$ is the amount of ethylene derived units in component A); $C_{2B}$ is the amount of ethylene derived units in component B); $C_{2c}$ is the amount of ethylene derived units in component C) and A, B and C are the amounts of components A), B) and C) wherein A+B+C=1.

Seal Initiation Temperature (SIT)

**Preparation of the film specimens**

Cast films have been prepared by extruding each test composition in a single screw Dr. Collin cast film extruder equipped with a three layers co-extrusion cast film line (main extruder screw diameter 45 mm, L/D 30; two side extruders

screw diameter 30 mm, L/D 30) at a melt temperature of 190-250 °C.

The cast film has been produced with a nominal thickness of 70 μm, which is the final specimen thickness. Some films were produced in the same way also with a nominal thickness of 50 μm.

Some films with a thickness of 50 μm are prepared by extruding each test composition in a single screw Collin extruder (length/diameter ratio of screw 1:25) at a film drawing speed of 7 m/min and a melt temperature do 210-250 °C. Each resulting film is superimposed on a 1000 μm thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a TOM Long film stretcher at 150°C, thus obtaining a 20 μm thick film (18 μm homopolymer+2 μm test). 2x5 cm specimens are cut from the films.

**Determination of the SIT.**

Seal strength has been measured according to ASTM F2029-16 and ASTM F88-15. By plotting the seal strength versus the sealing temperature, a sealing curve is produced. Then, SIT on cast film is determined as the temperature at the sealing force that corresponds to the half-height of the plateau of the sealing curve (plateau defined as D F ≤ 3N).

**Tensile Modulus** was measured according to ISO 527-2, and ISO 1873-2 on injection moulded sample.
**Flexural Modulus** was measure according to ISO 178, and supplemental conditions according to ISO 1873-2 on injection moulded sample.
Haze

Preparation of the film specimens

A film with a given thickness is prepared by extruding the polymer in a single screw Collin extruder (length/diameter ratio of screw: 25) at a film drawing speed of 7 m/min. and a melt temperature of 210-250 °C.

Determined on cast films of the test composition. The measurement was carried out on a 50x50 mm portion cut from the central zone of the film.

The instrument used for the test was a Gardner photometer with Haze-meter UX-10 equipped with a G.E. 1209 lamp and filter C. The instrument calibration was made by carrying out a measurement in the absence of the sample (0% Haze) and a measurement with intercepted light beam (100% Haze).

**Melting temperature, melting enthalpy and crystallization temperature**

Determined by differential scanning calorimetry (DSC). A sample weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220 ±1° C. The melting scan is recorded, a thermogram is obtained, and, from this, melting temperatures is read.

**Solubility in xylene at 25°C**

Xylene Solubles has been measured according to ISO 16 152-2005; with solution volume of 250 ml, precipitation at 25°C for 20 minutes, 10 of which with the solution in agitation (magnetic stirrer), and drying at 70°.

**Hexane extractable on 100 μm film**

Determined according to FDA 177, 1520 by suspending in an excess of hexane a specimen of the composition. The film is prepared by extrusion. The suspension is put in an autoclave at 50°C for 2 hours then the hexane is remove by evaporation and the dried residue is weighted.

**Example 1**

Preparation of the solid catalyst component

The catalyst system has been prepared according to example 1 of EP728769. Dicyclopentyldimethoxysilane (**Donor-D**) has been used as external donor.

Polymerization

The polymerization run is carried out in continuous mode in a series of three reactors equipped with devices to transfer the product from one reactor to the one immediately next to it. The first and the second reactors are liquid phase loop reactors, the third reactor is a fluidized bed gas-phase reactor. Components A) and B) are prepared in the loop reactors while component C) is prepared in the gas-phase reactor. Hydrogen is used as molecular weight regulator. The gas phase (propylene, ethylene and hydrogen) is continuously analyzed via gas-chromatography. At the end of the run the powder is discharged and dried under a nitrogen flow.

The main polymerization conditions and the analytical data relating to the polymers produced in the three reactors are reported in Table 1. Properties of the polymer are reported on Table 4.

Table 1

| PROCESS CONDITIONS | |
|---|---|
| | **Ex. 1** |
| **Precontact** | |
| Temperature °C | 12 |
| Residence time (min) | 15 |
| Teal/donor ratio | 3 |
| **Prepolymerization** | |
| Temperature °C | 20 |
| Residence time (min) | 8 |
| | |
| **Loop 1$^{st}$ reactor in liquid phase** - component A) | |
| Temperature, °C | 67 |
| Pressure, bar | 40 |
| Residence time, min | 50 |
| H2 feed, mol ppm | 340 |
| | |
| Split, wt% | 40 |
| **Loop 2$^{nd}$ reactor in liquid phase** - component B) | |
| Temperature, °C | 67 |
| Pressure, bar | 40 |
| Residence time, min | 45 |
| H2 feed, mol ppm | 550 |
| C2 feed, kg/h | 10 |
| Split, wt% | 45 |
| | |
| **Gas-Phase reactor** - component C) | |
| Temperature, °C | 80 |
| Pressure, bar | 18 |
| Residence time, min | 30 |
| H2/C3, mol/mol | 0.005 |
| H2/C2, mol/mol | 0.103 |
| C2/C2+C3, mol/ mol | 0.05 |

(continued)

| Gas-Phase reactor - component C) | |
|---|---|
| Split, wt% | 15 |

Table 2

| Component A) | | Ex 1 |
|---|---|---|
| C2 content, * | wt% | <0.5 |
| Split | - | 41% |
| Tm DSC | °C | 158.7 |
| Component B) | | |
| Split stage | - | 45% |
| C2 component B) ** | wt% | 4.5 |
| Component C) | | |
| MFR | dg/min | 0.95 |
| Split stage | % | 14% |
| C2 component C)** | wt% | 6.9 |
| *=even if ethylene has not been added to the reactor a small amount of ethylene pass from the second reactor to the first reactor.<br>** calculated | | |

C2=ethylene derived units

The polymer of example 1 has been added with the additives reported on table 3 and visbrooken.

Table 3

| | | |
|---|---|---|
| Irganox 1010 | wt% | **0.05** |
| Irgafos 168 | wt% | **0.10** |
| Ca Steareate | wt% | **0.05** |
| Peroxan | wt% | **0.03** |

Properties of the polymer obtained after visbreaking are reported on table 4

Table 4

| | | |
|---|---|---|
| MFR | dg/min | **6.7** |
| Xylene Soluble | wt% | **5.8** |
| C2 content, NMR | wt% | **3.1** |
| C2-XS content, NMR | wt% | **20.9** |
| Tm DSC | °C | **150.4** |
| $T_c$ DSC | °C | **105.6** |
| Hexane extractables (100mm film) | wt% | **1.3** |
| Tensile Modulus | MPa | **910** |
| Stress at yield | MPa | **25.3** |
| Elongation at yield | % | **13.6** |
| Stress at break | MPa | **28.2** |

(continued)

| | | |
|---|---|---|
| Elongation at break | % | **590** |
| Charpy @ +23°C | kJ/m2 | **8.1** |
| Charpy @ 0°C | kJ/m2 | **2.3** |

The product of table 4 has been used for producing cast films having thickness of 50μm and 70 μm the properties of the film have been reported on table 5

| ***Cast Film*** | | ***50*** μm | ***70*** μm |
|---|---|---|---|
| SIT, Sealing curve half-plateau T | °C | **132** | **133** |
| $\Delta(T_m$-SIT) | °C | **18** | **17** |
| Seal strenght | N/15mm | - | **30.3** |
| Seal strenght after retorting @135°C 45' | N/15mm | - | **32.5** |
| Tensile Modulus, MD | MPa | **413** | **468** |
| Stress at yield, MD | MPa | **17,0** | **17.6** |
| Elongation at yield, MD | % | **14,6** | **14.2** |
| Haze | % | **0.24** | **1.16** |
| Haze, after sterilization | % | **-** | **9.1** |

The haze of the films of example 1 are compared in table 6 with the haze reported for a 50 μm film of the polymer of example 1 of WO2013/135654 (comparative example 3)

| Ex | 1 (***50*** μm***)*** | 1 (***70*** μm***)*** | Comp 3 (***50*** μm***)*** |
|---|---|---|---|
| Haze % | 0.24 | 1.16 | 2.4 |
| Haze, after sterilization % | - | 9.1 | 15.5 |

the haze of 50 μm film of example 1 is considerably lower with respect to the have of the 50 μm of comparative example 3. Furthermore the haze of 70 μm film of example 1 is lower than the 50 μm of comparative example 3. The difference between the haze before and after the sterilization is considerably lower in the 70 μm of example 1 with respect to the 50 μm of comparative example 3 (7.94 vs. 13.1).

Sterilization procedure

The sample is placed in a steam sterilization autoclave Systec DX-65 set at 121 °C and 2.1 bar of nitrogen internal pressure. After 20 minutes of treatment in the autoclave, the item is let cool down to room temperature and conditioned at room temperature for 48 hours before testing.

## Claims

**1.** Propylene polymer compositions comprising:

A) from 30 wt% to 50 wt% of a propylene homopolymer or a copolymer of propylene with ethylene, containing up to 1.0 wt%, of ethylene derived units, measured by NMR; having a melting point, measured by DSC, comprised between 152 °C and 162°C;
B) from 35 wt% to 55 wt%, of a copolymer of propylene with ethylene, containing from 2.5 wt% to 5.8 wt%, of ethylene derived units, measured by NMR;
C) from 5 wt% to 24 wt%, of a copolymer of propylene with ethylene, containing from 6.0 wt% to 8.0 wt %, of ethylene derived units;
the sum of the amount of A,B and C being 100 wt%;

wherein in the propylene polymer composition:

- the melt flow rate, (ISO 1133 (230° C, 2.16 kg).) ranges from 0.5 g/10 min to 15.2 g/10 min;
- the xylene soluble fraction measured at 25°C ranges from 3.0 wt % to 8.0 wt%;
- the total content of ethylene derived units, measured by NMR; ranges from 2.0 wt% to 4.5 wt%;
- the content of ethylene derived units, measured by NMR; in the fraction soluble in xylene at 25°C ranges from 18.2 wt% to 23.4 wt%;
- the melting point measured by DSC ranges from 145 °C to 160 °C;

**2.** The propylene polymer compositions according to claim 1, wherein:

component A) ranges from 35 wt% to 45 wt%;
component B) ranges from 40 wt to 50 wt%;
component C) ranges from 8 wt% to 18 wt%.

**3.** The propylene polymer compositions according to claims 1-2 wherein component B) contains from 3.5 wt% to 5.3 wt% of ethylene derived units.

**4.** The propylene polymer compositions according to anyone of claims 1-3 wherein component C) contains from 6.3 wt% to 7.8 wt % of ethylene derived units.

**5.** The propylene polymer compositions according to anyone of claims 1-4 wherein the xylene soluble fraction measured at 25°C ranges from 3.5 wt % to 7.5 wt%.

**6.** The propylene polymer compositions according to anyone of claims 1-5 wherein the total content of ethylene derived units, measured by NMR ranges from 2.5 wt% to 4.2 wt%.

**7.** The propylene polymer compositions according to anyone of claims 1-6 wherein the content of ethylene derived units, measured by NMR; in the fraction soluble in xylene at 25°C ranges from 19.2 wt% to 22.4 wt%.

**8.** The propylene polymer compositions according to anyone of claims 1-7 wherein the melting point, measured by DSC ranges from 147 °C to 159 °C.

**9.** The propylene polymer compositions according to anyone of claims 1-8 wherein the hexane soluble fraction measured on a film having a thickness of 100 μm ranges from 0.7 wt% to 1.9 wt%.

**10.** The propylene polymer compositions according to anyone of claims 1-9 wherein the melt flow rate, (ISO 1133 (230° C, 2.16 kg).) ranges from 4.2 g/10 min to 11.2 g/10.

**11.** The propylene polymer compositions according to anyone of claims 1-10 wherein the hexane soluble fraction measured on a film having a thickness of 100 μm ranges from 0.5 wt% to 2.2 wt%.

**12.** The propylene polymer compositions according to anyone of claims 1-11 wherein the hexane soluble fraction measured on a film having a thickness of 100 μm ranges from 0.7 wt% to 1.9 wt%.

**13.** A film comprising the propylene polymer compositions of claims 1-12.

**14.** A cast film comprising the propylene polymer compositions of claims 1-12.

**15.** A sterilized cast film comprising the propylene polymer compositions of claims 1-12.

**Patentansprüche**

**1.** Propylenpolymerzusammensetzungen, umfassend:

A) 30 Gew.% bis 50 Gew.% eines Propylenhomopolymers oder eines Copolymers von Propylen mit Ethylen, das bis zu 1,0 Gew.% von Ethylen abgeleitete Einheiten enthält, gemessen mittels NMR; mit einem Schmelzpunkt,

gemessen mittels DSC, der zwischen 152 °C und 162 °C liegt;
B) 35 Gew.% bis 55 Gew.% eines Copolymers von Propylen mit Ethylen, das 2,5 Gew.% bis 5,8 Gew.% von Ethylen abgeleitete Einheiten enthält, gemessen mittels NMR;
C) 5 Gew.% bis 24 Gew.% eines Copolymers von Propylen mit Ethylen, das 6,0 Gew.% bis 8,0 Gew.% von Ethylen abgeleiteten Einheiten enthält;

wobei die Summe der Mengen von A, B und C 100 Gew.% beträgt;
wobei in der Propylenpolymerzusammensetzung:

- die Schmelzflussrate (ISO 1133 (230 °C, 2,16 kg) im Bereich von 0,5 g/10 min bis 15,2 g/10 min liegt;
- die in Xylol lösliche Fraktion, gemessen bei 25 °C, im Bereich von 3,0 Gew.% bis 8,0 Gew.% liegt;
- der Gesamtgehalt an von Ethylen abgeleiteten Einheiten, gemessen mittels NMR, im Bereich von 2,0 Gew.% bis 4,5 Gew.% liegt;
- der Gehalt an von Ethylen abgeleiteten Einheiten in der in Xylol bei 25 °C löslichen Fraktion, gemessen mittels NMR, im Bereich von 18,2 Gew.% bis 23,4 Gew.% liegt;
- der Schmelzpunkt, gemessenen mittels DSC, im Bereich von 145 °C bis 160 °C liegt.

**2.** Propylenpolymerzusammensetzungen nach Anspruch 1, wobei:

Komponente A) im Bereich von 35 Gew.% bis 45 Gew.% liegt;
Komponente B) im Bereich von 40 Gew.% bis 50 Gew.% liegt;
Komponente C) im Bereich von 8 Gew.% bis 18 Gew.% liegt.

**3.** Propylenpolymerzusammensetzungen nach einem der Ansprüche 1 bis 2, wobei Komponente B) 3,5 Gew.% bis 5,3 Gew.% von Ethylen abgeleitete Einheiten enthält.

**4.** Propylenpolymerzusammensetzungen nach einem der Ansprüche 1 bis 3, wobei Komponente C) 6,3 Gew.% bis 7,8 Gew.% von Ethylen abgeleitete Einheiten enthält.

**5.** Propylenpolymerzusammensetzungen nach einem der Ansprüche 1 bis 4, wobei die in Xylol lösliche Fraktion, gemessen bei 25 °C, im Bereich von 3,5 Gew.% bis 7,5 Gew.% liegt.

**6.** Propylenpolymerzusammensetzungen nach einem der Ansprüche 1 bis 5, wobei der Gesamtgehalt an von Ethylen abgeleiteten Einheiten, gemessen mittels NMR, im Bereich von 2,5 Gew.% bis 4,2 Gew.% liegt.

**7.** Propylenpolymerzusammensetzungen nach einem der Ansprüche 1 bis 6, wobei der Gehalt an von Ethylen abgeleiteten Einheiten, gemessen mittels NMR, in der in Xylol bei 25 °C löslichen Fraktion im Bereich von 19,2 Gew.% bis 22,4 Gew.% liegt.

**8.** Propylenpolymerzusammensetzungen nach einem der Ansprüche 1 bis 7, wobei der Schmelzpunkt, gemessen mittels DSC, im Bereich von 147 °C bis 159 °C liegt.

**9.** Propylenpolymerzusammensetzungen nach einem der Ansprüche 1 bis 8, wobei die hexanlösliche Fraktion, gemessen an einem Film mit einer Dicke von 100 μm, im Bereich von 0,7 Gew.% bis 1,9 Gew.% liegt.

**10.** Propylenpolymerzusammensetzungen nach einem der Ansprüche 1 bis 9, wobei die Schmelzflussrate (ISO 1133, 230 °C, 2,16 kg) im Bereich von 4,2 g/10 min bis 11,2 g/10 min liegt.

**11.** Propylenpolymerzusammensetzungen nach einem der Ansprüche 1 bis 10, wobei die hexanlösliche Fraktion, gemessen an einem Film mit einer Dicke von 100 μm, im Bereich von 0,5 Gew.% bis 2,2 Gew.% liegt.

**12.** Propylenpolymerzusammensetzungen nach einem der Ansprüche 1 bis 11, wobei die hexanlösliche Fraktion, gemessen an einem Film mit einer Dicke von 100 μm, im Bereich von 0,7 Gew.% bis 1,9 Gew.% liegt.

**13.** Film, umfassend die Propylenpolymerzusammensetzungen nach den Ansprüchen 1 bis 12.

**14.** Gießfilm, umfassend die Propylenpolymerzusammensetzungen nach den Ansprüchen 1 bis 12.

15. Sterilisierter Gießfilm, umfassend die Propylenpolymerzusammensetzungen nach den Ansprüchen 1 bis 12.

**Revendications**

1. Compositions de polymère de propylène comprenant :

A) 30 % en poids à 50 % en poids d'un homopolymère de propylène ou d'un copolymère de propylène avec de l'éthylène, contenant jusqu'à 1,0 % en poids de motifs dérivés d'éthylène, mesurés par RMN ; présentant un point de fusion, mesuré par DSC, compris entre 152 °C et 162 °C ;
B) 35 % en poids à 55 % en poids d'un copolymère de propylène avec de l'éthylène, contenant 2,5 % en poids à 5,8 % en poids de motifs dérivés d'éthylène, mesurés par RMN ;
C) 5 % en poids à 24 % en poids d'un copolymère de propylène avec de l'éthylène, contenant 6,0 % en poids à 8,0 % en poids de motifs dérivés d'éthylène ;
la somme des quantités de A, B et C valant 100 % en poids ;
où, dans la composition de polymère de propylène :

- l'indice de fluidité à chaud (ISO 1133 (230 °C, 2,16 kg)) est situé dans la plage de 0,5 g/10 min à 15,2 g/10 min ;
- la fraction soluble dans le xylène, mesurée à 25 °C, représente 3,0 % en poids à 8,0 % en poids ;
- la teneur totale en motifs dérivés d'éthylène, mesurée par RMN, est située dans la plage de de 2,0 % en poids à 4,5 % en poids ;
- la teneur en motifs dérivés d'éthylène, mesurée par RMN, dans la fraction soluble dans le xylène à 25 °C est située dans la plage de 18,2 % en poids à 23,4 % en poids ;
- le point de fusion, mesuré par DSC, est situé dans la plage de 145 °C à 160 °C.

2. Compositions de polymère de propylène selon la revendication 1 :

le constituant A) représentant 35 % en poids à 45 % en poids ;
le constituant B) représentant 40 % en poids à 50 % en poids ;
le constituant C) représentant 8 % en poids à 18 % en poids.

3. Compositions de polymère de propylène selon les revendications 1 à 2, le constituant B) contenant 3,5 % en poids à 5,3 % en poids de motifs dérivés d'éthylène.

4. Compositions de polymère de propylène selon l'une quelconque des revendications 1 à 3, le constituant C) contenant 6,3 % en poids à 7,8 % en poids de motifs dérivés d'éthylène.

5. Compositions de polymère de propylène selon l'une quelconque des revendications 1 à 4, la fraction soluble dans le xylène, mesurée à 25 °C, représentant 3,5 % en poids à 7,5 % en poids.

6. Compositions de polymère de propylène selon l'une quelconque des revendications 1 à 5, la teneur totale en motifs dérivés d'éthylène, mesurée par RMN, étant située dans la plage de 2,5 % en poids à 4,2 % en poids.

7. Compositions de polymère de propylène selon l'une quelconque des revendications 1 à 6, la teneur en motifs dérivés d'éthylène, mesurée par RMN, dans la fraction soluble dans le xylène à 25 °C étant située dans la plage de 19,2 % en poids à 22,4 % en poids.

8. Compositions de polymère de propylène selon l'une quelconque des revendications 1 à 7, le point de fusion, mesuré par DSC, étant situé dans la plage de 147 °C à 159 °C.

9. Compositions de polymère de propylène selon l'une quelconque des revendications 1 à 8, la fraction soluble dans l'hexane, mesurée sur un film présentant une épaisseur de 100 $\mu$m, représentant 0,7 % en poids à 1,9 % en poids.

10. Compositions de polymère de propylène selon l'une quelconque des revendications 1 à 9, l'indice de fluidité à chaud, (ISO 1133 (230 °C, 2,16 kg) étant situé dans la plage de 4,2 g/10 min à 11,2 g/10 min.

11. Compositions de polymère de propylène selon l'une quelconque des revendications 1 à 10, la fraction soluble dans

l'hexane, mesurée sur un film présentant une épaisseur de 100 µm, représentant 0,5 % en poids à 2,2 % en poids.

**12.** Compositions de polymère de propylène selon l'une quelconque des revendications 1 à 11, la fraction soluble dans l'hexane, mesurée sur un film présentant une épaisseur de 100 µm, représentant 0,7 % en poids à 1,9 % en poids.

**13.** Film comprenant les compositions de polymère de propylène selon les revendications 1 à 12.

**14.** Film coulé comprenant les compositions de polymère de propylène selon les revendications 1 à 12.

**15.** Film coulé stérilisé comprenant les compositions de polymère de propylène selon les revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013135654 A
- US 9932468 B2
- US 4399054 A
- EP 45977 A
- US 4472524 A
- EP 361493 A
- EP 728769 A

### Non-patent literature cited in the description


- **C. J. CARMAN ; R. A. HARRINGTON ; C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO ; Y. NAITO ; K. MIZUNUMA ; T. MIYATAKE**. Carbon-13 NMR determination of monomer sequence distribution in ethylene-propylene copolymers prepared with δ-titanium trichloride-diethylaluminum chloride. *Macromolecules*, 1982, vol. 15, 1150
- **C.J. CARMAN ; R.A. HARRINGTON ; C.E. WILKES**. *Macromolecules*, 1977, vol. 10, 536